# EUROPEAN PATENT APPLICATION

(11) **EP 1 234 661 A2**
(43) Date of publication of application: **28.08.2002**
(21) Application number: 02425098.7
(22) Date of filing: 22.02.2002
(51) Int. Cl.: B32B 31/08, B32B 27/32

(54) **Method of manufacturing a foil formed of two coupled films and apparatus for carrying out the same**

(30) Priority: 23.02.2001 IT RM20010100
(71) Applicant: Akro-Flex S.A.S. Di Garegnani Enrico & Co., 20080 Vermezzo (IT)
(72) Inventor: Garegnani, Antonio, 20080 Vermezzo (MI) (IT)
(74) Representative: Sarpi, Maurizio

(57) **Abstract**

A method of manufacturing a foil consisting of two films with very low thickness coupled to each other, one of which being a film of pre-stretched extensible material with residual stretching preferably near zero acting as a mechanical high-resistance support, the other one being a film of thermoshrinking material having the function of compacting the packages by a quick oven treatment.

According to the invention, the thermoshrinking film is preferably placed outside the package.

## Description

The present invention relates to a method of manufacturing a packing foil consisting of two coupled films with low thickness and particularly suitable for packing bottles of water and generally drinks in order to provide the so-called "packages" (bundles usually of six bottles) arranged on pallets for the next handling and/or storage by ordinary fork lift trucks.

Nowadays the use of foils or films of the thermoshrinking type for packing bottles of drinks is well known, however, one problem of such foils is that their large thickness, which usually is about 60 µm or more, is a cause for high cost of production as the cost of the package foils is proportional to their weight. Therefore, with the same length necessary to wrap the package, the weight as well as the cost is directly proportional to the thickness of the foil.

A further problem of the prior art is due to the fact that, if the thickness of the foil is diminished in order to reduce the cost, it is impossible to provide packages because the foil would easily break with the result of further storage and transportation problems.

The present invention aims at overcoming the above problems by providing a method of manufacturing a new foil consisting of two thin films, the total thickness of which is strongly reduced with respect to the above-mentioned thermoshrinking films but the mechanical withstand is absolutely suitable for providing packages and bundles for bottles of drinks. Advantageously, according to the invention it is possible to provide packages and bundles with thermoshrinking, withstanding double-layer foils, the total thickness of which is about half the thickness of the presently used thermoshrinking foils, with a reduction in the cost of the starting materials of about 50%.
This has been accomplished according to the present invention by providing a method of manufacturing a foils consisting of two films with very low thickness coupled to each other, one of which being a film of pre-stretched extensible material with a residual stretching near zero acting as a mechanical high-resistance support, the other one being a film of thermoshrinking material having the function of compacting the packages by a quick oven treatment.
According to the invention, the thermoshrinking film is preferably placed at the outside of the package.
Another object of the present invention is an apparatus for providing a double-layer foil wound about a reel of the type described above which is particularly suitable for being used in the packing machines of the known type.

A better understanding of the invention will result from the following detailed description with reference to the accompanying drawing that shows a preferred embodiment thereof only by way of a not limiting example.

In the drawing:

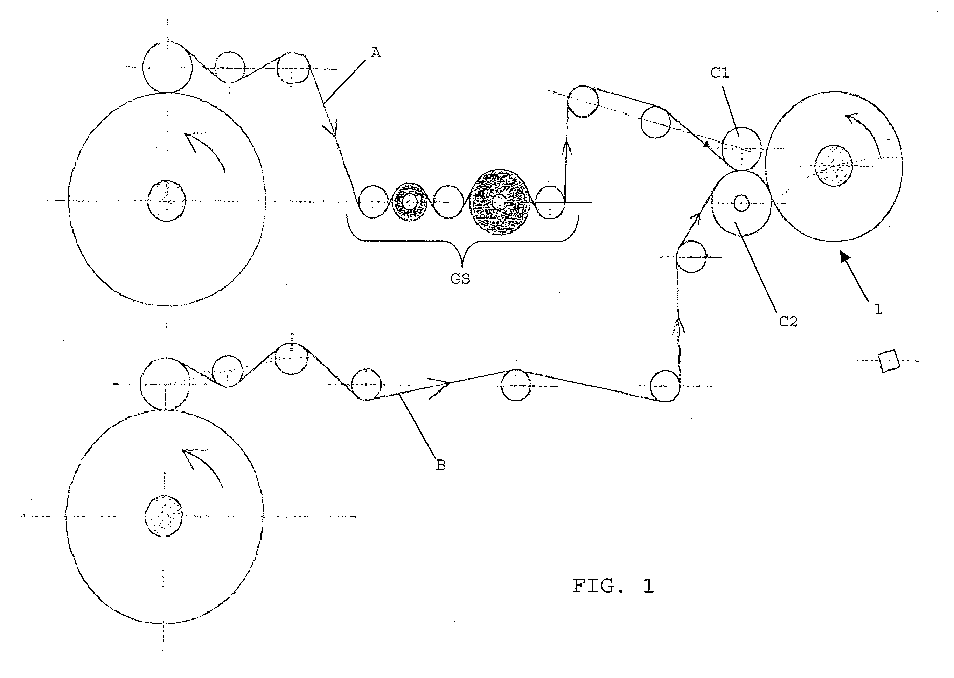

Fig. 1 is a diagram of a roller arrangement for feeding both the extensible and the thermoshrinking films, the stretching assembly, the coupling cylinders, and the double-layer foil take-up reel of the apparatus according to the invention.

According to the invention, the manufacturing method provides a double-layer film 1 by coupling two films with small thickness, one of which being of extensible pre-stretched material, preferably with no residual stretching, the other one being of thermoshrinking material.

For example, the first film is a film A of polystyrene with linear chain and a thickness of about 10 µm, the second film is a "blister" film B of polyethylene with a thickness of about 20 µm having one side of copolymer EVA known in the art with low content which is sticky so that the bonding to the first film is facilitated without using adhesives. Such second film B is also able to receive any printing label.

Such copolymer EVA consists of a mixture of low-density polyethylene and ethyl vinyl acetate or alternatively polyisobutylene may be used.

As already mentioned, according to the invention the thermoshrinking film B is coupled to the first film A so that the latter is placed outside the package or bundle during the following bottle packing step. In this way, during the thermoshrinkage, inside film A with the function of mechanical support is pressed against the bottles to be packed.

It is evident from the foregoing that the described method allows advantageously a packing film 1 for bottles and the like with high withstand and very light weight to be manufactured. It should be appreciated that the total thickness of the double-layer foils according to the invention is about 30 µm, while the thickness of the thermoshrinking foils used nowadays in the packing machines, for example for mineral water, is about 60 µm or more.

Moreover, the temperature needed for the thermoshrinkage of the described film is about 100÷140°C, i.e. little more than half temperature needed by the known films (200÷210°C).

Advantageously, the thermoshrinking film B becomes integral with the pre-stretched film A, thus ensuring the holding of the package also without adhesives.

It is evident that pre-stretched film A and thermoshrinking film B forming the double-layer foil 1 can consist of materials which are different from those described above only by way of example, however, the peculiar feature upon which the invention is based is that one film acts as mechanical support so that it cannot be thermoshrinking, and the other film has a function of compacting the packages or bundles so that it should be thermoshrinking.

As illustrated above, an object of the present invention is also an apparatus for carrying out the method described above.

With reference to Figure 1, such apparatus consists essentially of a rolling press with pressing cylinders C1 and C2 which couple pre-stretched film A to thermoshrinking film B to form one double-layer foil 1 which is taken up on a reel for the next use in the packing machines.

In the specific embodiment described herebelow the extensible film A is stretched by a stretching assembly GS consisting of a number of rollers rotating at a speed which is greater than the unwinding speed of film A to be stretched. The amount of the stretching can be varied by changing the speed of the rollers of the stretching assembly GS in a known manner.

Advantageously, if the stretching should be completely avoided, it is also possible to shift the whole stretching assembly GS upwardly or downwardly so that the extensible film A reaches directly the rolling press. This is particularly useful if a pre-stretched film A is used or the capability of being extended of film A to be coupled to thermoshrinking film B should be kept unchanged.

Moreover, it is also possible to supply the apparatus with the extensible film produced by a film manufacturing machine and with the thermoshrinking film of a blister extruder or with one of the two films while the other film is supplied by a film unwinding reel.

According to an alternate embodiment, pre-stretched film A which is coupled to thermoshrinking film B can advantageously be formed of longitudinal stiffening strips located where the greatest stress is applied, i.e. at the caps of the bottles.

In this case, the weight per length unit of the film of the present invention is further reduced still lowering the cost of production.

At last, it should be appreciated that, when the package enters the oven at a temperature which causes the thermoshrinkage, thermoshrinking film B becomes integral with extensible film A whether the latter is pre-stretched or not.

The present invention has been described and illustrated according to a preferred embodiment thereof, however, it should be understood that those skilled in the art can make equivalent modifications and/or replacements without departing from the scope of the present industrial invention.

For instance, in order to increase the adhesion of both films A and B forming the double-layer foil 1, an adhesive could be provided between them and activated by a rolling press coupled to hot cylinders C1 and C2.

## Claims

1. A method of manufacturing a packing foil (1) particularly suitable for packing bottles of water and generally drinks, **characterized in that** two films (A, B) with very low thickness coupled to each other to form said packing foil (1) are used, one of which being a film (A) of pre-stretched extensible material acting as a mechanical high-resistance support, the other one being a film (B) of thermoshrinking material having the function of compacting the packages by a quick oven treatment.

2. The method of manufacturing a packing foil (1) according to claim 1, **characterized in that** a pre-stretched film (A) with a residual stretching near zero is used.

3. The method of manufacturing a packing foil (1) according to claim 1 or 2, **characterized in that** the thermoshrinking film (B) is placed on the outside of the package.

4. The method of manufacturing a packing foil (1) according to any preceding claim, **characterized in that** a film (A) of polystyrene with linear chain and a thickness of about 10 µm is coupled to a "blister" film (B) of polyethylene with a thickness of about 20 µm having one side of copolymer EVA with low content which is sticky so that the bonding to the first film is facilitated without using adhesives, said second film (B) being also able to receive any printing label.

5. An apparatus for manufacturing a packing foil (1) particularly suitable for packing bottles of water and generally drinks, **characterized in that** there is provided a rolling press with pressing cylinders (C1 and C2) which couple a pre-stretched extensible film (A) to a thermoshrinking film (B) to form one double-layer foil (1) which is taken up on a reel for the next use in the known packing machines.

6. The apparatus for manufacturing a packing foil (1) according to claim 5, **characterized in that** the extensible film (A) is stretched by passing through a stretching assembly (GS) consisting of a number of rollers rotating at a speed which is greater than the unwinding speed of film (A) to be stretched, the amount of said stretching being varied by changing the speed of the rollers of the stretching assembly (GS) in a known manner.

7. The apparatus for manufacturing a packing foil (1) according to the preceding claim, **characterized in that**, if the stretching should be completely avoided, the whole stretching assembly is shifted upwardly or downwardly so that the extensible film (A) reaches directly the rolling press without passing through the stretching assembly (GS).

8. The apparatus for manufacturing a packing foil (1) according to any claim from 5 on, **characterized in that** the extensible film is supplied by a film manufacturing machine and the thermoshrinking film is supplied by a blister extruder.

9. The apparatus for manufacturing a packing foil (1) according to any claim 5 to 7, **characterized in that** it is either supplied with extensible film by a film manufacturing machine or with thermoshrinking film by a blister extruder, the other film being supplied by a film unwinding reel.

10. The apparatus for manufacturing a packing foil (1) according to any claim from 5 on, **characterized in that** pre-stretched film (A) which is coupled to thermoshrinking film (B) is formed of longitudinal stiffening strips located where the greatest stress is applied, i.e. at the caps of the water bottles.

11. The apparatus for manufacturing a packing foil (1) according to any claim from 5 on, **characterized in that** in order to increase the adhesion of both films (A and B) forming the double-layer foil (1), an adhesive could be provided between them and activated by a rolling press coupled to hot cylinders (C1 and C2), the adhesive being applied in a known manner.

12. The method of manufacturing a packing foil (1) according to claims 1 to 4, **characterized in that** a pre-stretched film (A) is used which is coupled to thermoshrinking film (B) and formed of longitudinal stiffening strips located where the greatest stress is applied, i.e. at the caps of the bottles.

13. The method of manufacturing a packing foil (1) according to claims 1 to 4, **characterized in that** a layer of adhesive is applied in a known manner between the pre-stretched extensible film (A) and the thermoshrinking film (B), a rolling press coupled to hot cylinders (C1 and C2) being used for such application.
